# EUROPÄISCHE PATENTSCHRIFT

(11) **EP 3 755 859 B1**
(45) Veröffentlichungstag und Bekanntmachung des Hinweises auf die Patenterteilung: **28.01.2026**
(21) Anmeldenummer: 19708034.4
(22) Anmeldetag: 20.02.2019
(51) Int. Cl.: E05F 15/73, E05F 15/74, G01S 17/10, G01S 17/32, G01S 17/88

(54) **VORRICHTUNG UND VERFAHREN ZUR TÜRRAUMÜBERWACHUNG**
DEVICE AND METHOD FOR MONITORING A DOOR AREA
DISPOSITIF ET PROCÉDÉ DE SURVEILLANCE D'UNE ZONE DE PORTE

(30) Priorität: 20.02.2018 DE 102018103804; 21.06.2018 DE 102018115007
(43) Veröffentlichungstag der Anmeldung: 30.12.2020
(73) Patentinhaber: Iris-Gmbh Infrared & Intelligent Sensors, 12459 Berlin (DE)
(72) Erfinder: THUN-HOHENSTEIN, Andreas, 12555 Berlin (DE); LEDER, Harald, 12249 Berlin (DE); WAGNER, Wilfried, 12683 Berlin (DE); HAUN, Stefan, 39104 Magdeburg (DE)
(74) Vertreter: Eisenführ Speiser
(86) Internationale Anmeldenummer: PCT/EP2019/054156
(87) Internationale Veröffentlichungsnummer: WO 2019/162298

(56) Entgegenhaltungen:
- EP-A1- 1 152 261
- EP-A1- 1 752 793
- WO-A1-2009/088361
- DE-A1- 102005 011 116
- DE-B4- 102005 011 116
- US-A- 5 410 149

## Beschreibung

Die Erfindung betrifft eine Vorrichtung sowie Verfahren zur Türraumüberwachung von zumindest partiell verglasten Türen.

Es ist bekannt, einen Innentürraum automatischer Türen mit Sensoren zu überwachen. Ziel dieser Überwachung ist es, sicherzustellen, dass der automatische Schließvorgang der Türen nicht einsetzt, bevor nicht alle Personen (oder Gegenstände) den Türraum verlassen haben. In der Regel wird eine weitere Sensorik zum Schutz gegen Einklemmen eingesetzt, beispielsweise Drucksensoren an den Türkanten oder Lichtgitter.

Bekannt ist eine Türraumüberwachung mittels aktiver Infrarotsensoren mit Hintergrundausblendung. Dabei wird ein schmaler Raumwinkel entlang des Türblattes mit kurzwelligem Infrarotlicht (IR) ausgeleuchtet. Als Lichtquelle werden in der Regel IR-LED eingesetzt. Die Empfänger sind zu den Lichtquellen so angeordnet, dass sich die Gesichtsfelder der Empfänger und die Beleuchtungsfelder kurz vor dem Hintergrund kreuzen. Durch diese Lösung kann kein IR-Licht, welches vom Hintergrund reflektiert wird, in den Empfänger gelangen.

Neue Lösungen setzen an Stelle von Lichttastern mit Hintergrundausblendung Matrix-Sensoren nach dem Time-of-Flight-Prinzip ein. Diese Sensoren besitzen eine höhere räumliche Auflösung und können über die Tiefenauflösung Objekte im Türraum genauer bestimmen. Reflexionseigenschaften des Hintergrundes können wie bei den Sensoren mit Hintergrundausblendung weitestgehend unterdrückt werden.

Diese heute im Innenraum verwendete Sensorik kann allerdings keine Aussagen darüber treffen, ob sich Personen in einem Außenbereich nahe der Tür aufhalten bzw. noch den Türraum von außen betreten wollen, sofern die Türen geschlossen oder fast geschlossen sind. Keiner der beschriebenen Sensoren kann von innen durch eine geschlossene Tür eine Überwachung des äußeren Türraums vornehmen. Das von den erwähnten beiden Sensortypen emittierte Infrarotlicht wird an den Türen reflektiert und führt zu nicht verwertbaren Signalen. Für eine zusätzliche Außenraumüberwachung müssen gemäß dem Stand der Technik im Außenbereich des Türraumes weitere Sensoren angebracht werden, die gegebenenfalls dann auch Witterungseinflüssen und ähnlichem ausgesetzt sind.

Aus DE 10 2005 011116 A1 ist eine Vorrichtung zur Ansteuerung und/oder Überwachung wenigstens eines automatisch angetriebenen Flügels bekannt, bei der eine 3-D-Kamera durch Detektion und Auswertung von Strahlung, welche an einem Objekt im Überwachungsbereich reflektiert und/oder gestreut wurde, die dreidimensionale Struktur eines Objekts erfasst und hierdurch das Objekt detektiert.

Aus EP 1 152 261 A1 sind eine Vorrichtung und ein Verfahren zur räumlich aufgelösten Photodetektion und Demodulation modulierter elektromagnetischer Strahlung bekannt.

Aus US 5,410,149 A ist ein optischer Detektor zum Erkenne von Hindernissen in einem Türraum mittels eines Lichtvorhangs bekannt.

Aus EP 1 752 793 A1 sind ein Verfahren und eine Vorrichtung zur redundanten Abstandsmessung bekannt, bei der abweichende Signalpfade anhand anhand abweichender Phasen erkannt werden.

Vor diesem Hintergrund ist es ein Ziel der Erfindung, eine Vorrichtung und Verfahren für eine verbesserte oder vereinfachte Türraumüberwachung bereitzustellen.

Dieses Ziel wird gemäß einem ersten Aspekt der Erfindung mit einer Vorrichtung zur Türraumüberwachung einer zumindest partiell verglasten Tür erreicht, die
- mindestens einen Sender zum Aussenden mindestens eines Sendepulses elektromagnetischer Strahlung sowie
- einen Bildaufnehmer aufweist, der eine Empfängermatrix mit mindestens einem ersten Empfängerblock, der eine Vielzahl von ersten Empfängern aufweist, umfasst. Die ersten Empfänger des ersten Empfängerblocks sind derart ausgebildet und angeordnet, dass sie in einem zweiten vorbestimmten auf die Tür bezogenen Abstandsbereich eines Außenbereichs des Türraumes reflektierte Signalanteile des Sendepulses empfangen. Jeder erste Empfänger weist dabei eine Speichereinheit auf, die ausgebildet ist, die empfangenen reflektierten Signalanteile aufzuintegrieren und zu speichern.

Außerdem weist die Vorrichtung eine mit dem Bildaufnehmer und dem Sender verbundene Steuerungseinheit auf, die ausgebildet ist:
- einen Sendepuls des Senders auszulösen, und
- nach einer vorbestimmten ersten Ruhezeitspanne, die länger ist als eine Zeitspanne, in der ein von der verglasten Tür reflektiertes Signal des Sendepulses die ersten Empfänger des ersten Empfängerblockes erreicht, die ersten Empfänger des ersten Empfängerblocks für eine vorbestimmte erste Empfangszeitspanne zu aktivieren.

Schließlich weist die Vorrichtung eine Auswerteeinheit auf, die ausgebildet ist,
- die gespeicherten Signalanteile des jeweiligen Empfängers auszulesen und zu Topographiebilddaten zu verarbeiten, und
- die Topographiebilddaten mit hinterlegten Referenzbilddaten für einen freien Türraum zu vergleichen
   oder
- die gespeicherten Signalanteile des jeweiligen Empfängers auszulesen und einen Abstandswert daraus zu ermitteln, und
- den jeweiligen Abstandswert mit einem hinterlegten Referenzwert für einen freien Türraum zu vergleichen.

Die Erfindung schließt die Erkenntnis ein, dass eine Überwachung auch eines Außenbereiches eines Türraumes von innen heraus nach dem Time-of-Flight-Prinzip möglich ist, wenn die von der Tür selbst verursachten Reflektionen ausgeblendet werden können. Weiterhin schließt die Erfindung die Erkenntnis ein, dass dies vorteilhaft geschieht, indem empfangsseitig reflektierte Signalanteile in einem Zeitraum, in dem die von der Tür reflektierten Signalanteile erwartet werden, außer Betracht bleiben. Dies kann einerseits über den Ansatz erfolgen, dass der Empfang von reflektierten Signalanteilen erst nach einer der Laufzeit der von der Tür reflektierten Signale angepassten Ruhezeit begonnen wird, wie es sich auch in einem Verfahren gemäß dem zweiten Aspekt der Erfindung niederschlägt; oder aber über den Ansatz, dass ein zeitlich zuerst auftretendes Reflektionsmaximum automatisch der Tür zugeordnet wird und für eine Überwachung nur ein zweites, mit entsprechend höherer Laufzeit auftretendes Maximum herangezogen wird. Letzteres entspricht einem Verfahren gemäß einem dritten Aspekt der Erfindung.

Ein Verfahren gemäß dem zweiten Aspekt der Erfindung umfasst die Schritte
- Aussenden eines Sendepulses elektromagnetischer Strahlung,
- nach einer vorbestimmten ersten Ruhezeitspanne, die länger ist als eine Zeitspanne, in der ein von der verglasten Tür reflektiertes Signal des Sendepulses die ersten Empfänger des ersten Empfängerblockes erreicht, Empfangen in einem ersten vorbestimmten Abstandsbereich zur Tür eines Außenbereichs des Türraumes reflektierter Signalanteile des Sendepulses über eine Empfangszeitspanne
- Aufintegrieren und Speichern der empfangenen reflektierten Signalanteile und
- Auslesen der gespeicherten Signalanteile und
- Verarbeiten der gespeicherten Signalanteile zu Topographiebilddaten und Vergleichen der Topographiebilddaten mit hinterlegten Referenzbilddaten für einen freien Türraum
   oder
- Ermitteln eines Abstandswertes aus den gespeicherten Signalanteilen und Vergleichen des jeweiligen Abstandswertes mit einem hinterlegten Referenzwert für einen freien Türraum.

Ein Verfahren gemäß dem dritten Aspekt der Erfindung umfasst die Schritte
- Aussenden einer Vielzahl von Sendepulsen elektromagnetischer Strahlung in vorbestimmten Zeitabständen
- Bestimmen einer Verzögerungszeit bei jedem Aussenden eines Sendepulses, wobei die Verzögerungszeit mit jedem Sendepuls stufenweise ansteigt
- Empfangen reflektierter Signalanteile des Sendepulses nach der jeweiligen Verzögerungszeit
- Aufintegrieren und Speichern der empfangenen reflektierten Signalanteile für jeden Sendepuls
- Bestimmen eines ersten und eines zweiten Maximalwertes der aufintegrierten Signalanteile, wobei der erste Maximalwert bei einer geringeren Verzögerungszeit erreicht wurde als der zweite Maximalwert
- Bestimmen eines Abstandswertes aus dem zweiten Maximalwert, und
- Vergleichen des jeweiligen Abstandswert mit einem hinterlegten Referenzwert für einen freien Türraum.

Die Erfindung ermöglicht somit die Überwachung eines Außenbereiches des Türraumes auch bei geschlossener Tür von innen heraus und legt damit die Grundlage, um die Sensorik für die Türraumüberwachung vollständig und somit geschützt im Innenraum unterzubringen.

Nachfolgend werden weitere Ausführungsformen der Erfindung beschrieben. Diese Merkmale und Bestandteile können untereinander kombiniert werden, soweit sie nicht ausdrücklich als Alternativen beschrieben sind.

In einer Ausführungsform weist die Empfängermatrix zusätzlich mindestens einen Innenblock auf, der eine Vielzahl von ersten Empfängern aufweist. Die ersten Empfänger des Innenblocks sind ausgebildet und angeordnet, in einem Innenbereich des Türraumes reflektierte Signalanteile des Sendepulses zu empfangen. Jeder erste Empfänger weist eine Speichereinheit auf, die ausgebildet ist, die empfangenen reflektierten Signalanteile aufzuintegrieren und zu speichern. Die Steuerungseinheit ist ausgebildet, die ersten Empfänger des Innenblocks unmittelbar nach dem Auslösen des Sendeimpulses für eine vorbestimmte erste Innen-Empfangszeitspanne zu aktivieren. Mit dieser Ausführungsform ist eine Überwachung von Innen- und Außenbereich des Türraumes mit nur einer gemeinsamen Vorrichtung möglich.

Der Sender ist bevorzugt so ausgebildet, dass der Sendepuls den gesamten Innen- und/oder Außenbereich erfasst. Es können aber auch mehrere Sender verwendet werden, deren Sendepulse jeweils nur bestimmte Teilbereiche des Türraumes abdecken. Im Falle mehrerer Sender können diese synchron oder aufeinanderfolgend angesteuert werden.

In einer weiteren Ausführungsform umfasst die Empfängermatrix einen zweiten Empfängerblock, der eine Vielzahl von ersten Empfängern aufweist, Die ersten Empfänger des zweiten Empfängerblocks sind ausgebildet und angeordnet, in einem zweiten vorbestimmten auf die Tür bezogenen Abstandsbereich eines Außenbereichs des Türraumes reflektierte Signalanteile des Sendepulses zu empfangen. Jeder Empfänger weist eine Speichereinheit auf, in der die empfangenen reflektierten Signalanteile aufintegriert und gespeichert werden. Der erste vorbestimmte Abstandsbereich ist dabei näher an der Tür als der zweite vorbestimmte Abstandsbereich. Die Steuerungseinheit ist in dieser Ausführungsform ausgebildet, nach einer vorbestimmten zweiten Ruhezeitspanne, die länger ist als eine Zeitspanne, in der ein von der verglasten Tür reflektiertes Signal des Beleuchtungssignals die ersten Empfänger des zweiten Empfängerblockes erreicht, die ersten Empfänger des zweiten Empfängerblocks für eine vorbestimmte zweite Empfangszeitspanne zu aktivieren. Durch Nutzen eines zweiten Empfängerblocks kann der überwachte Teil des Außenbereiches vergrößert werden, indem Reflektionen aus dem zweiten Abstandsbereich berücksichtigt werden. Bevorzugt sind die Empfänger des ersten und zweiten Empfängerblocks derart angeordnet, dass der Abstandsbereich des Außenbereichs, aus dem sie Reflektionen empfangen, mit zunehmender Höhe vom Boden aus gesehen kleinere horizontale Abstände zur Tür aufweist. Der erste und zweite Empfängerblock sind bevorzugt schwenkbar ausgeführt, so dass sie bei einer Installation entsprechend der örtlichen Gegebenheiten ausgerichtet werden können oder nachträglich veränderten örtlichen Gegebenheiten angepasst werden können. Zur weiteren Erweiterung des überwachten Teiles des Außenbereiches umfasst die Empfängermatrix zusätzlich eine Vielzahl weiterer Empfängerblöcke, die analog zum ersten und zweiten Empfängerblock aufgebaut sind und die jeweils ausgebildet und angeordnet sind, um Reflektionen aus weiteren Teilen des Außenbereiches empfangen zu können. Die Steuereinheit ist dann jeweils ausgebildet, für jeden Empfängerblock eine entsprechende Ruhezeitspanne unter Berücksichtigung der Laufzeit des von der Tür reflektierten Signalanteiles vorzugeben. Durch Verwenden verschiedener unterschiedlich angesteuerter Blöcke können somit je Bildaufnahme verschiedene Zeitfenster als Teilaufnahmen erfasst werden. Dies lässt sich auch als ortsdiskretes Verfahren beschreiben.

Das Verfahren gemäß dem dritten Aspekt der Erfindung hingegen kann auch als zeitdiskretes Verfahren bezeichnet werden. Hier wird für jedes Zeitfenster eine eigene vollständige Bildaufnahme realisiert. Gegenüber dem ortsdiskreten Verfahren steigt dadurch die Anforderung an die Aufnahme- und Verarbeitungsgeschwindigkeit. Je x Zeitzonen benötigt man die x-fache Aufnahme- und Verarbeitungsgeschwindigkeit gemessen in Bildern je Sekunde (fps - frame per second).

In einer weiteren Ausführungsform ist unmittelbar benachbart zu jedem ersten Empfänger zusätzlich ein zweiter Empfänger angeordnet, der ebenso wie der erste Empfänger des jeweiligen Knotenpunktes ausgebildet und angeordnet ist. Jeder zweite Empfänger weist eine Speichereinheit auf, die ausgebildet ist, die empfangenen reflektierten Signalanteile aufzuintegrieren und zu speichern. Dabei ist die Steuerungseinheit ausgebildet, unmittelbar im Anschluss an die jeweilige Empfangszeitspanne des jeweiligen ersten Empfängers den zweiten Empfänger für eine vorbestimmte verzögerte Empfangszeitspanne zu aktivieren. Durch Verwenden eines zweiten Empfängers in Ergänzung zum jeweiligen ersten Empfänger, dessen Empfangszeitspanne zeitlich nach dem des ersten Empfängers liegt, können die reflektierten Signalanteile über die im von den beiden Empfangszeitspannen definierten Empfangszeitraum liegenden Laufzeiten in zwei Gruppen von Höhenabständen über dem Boden des Türbereiches eingeteilt werden. Die Topographiebilddaten und/oder Abstandswerte können somit genauer ermittelt werden.

Bevorzugt ist die Auswerteeinheit ausgebildet, die vom ersten Empfänger aufintegrierten Signalanteile des reflektierten Sendeimpulses und die vom zugehörigen zweiten Empfängers aufintegrierten Signalanteile des reflektierten Sendeimpulses miteinander zu vergleichen und ins Verhältnis zueinander zu setzen, um aus dem Verhältnis der aufintegrierten Signalanteile einen exakten Abstand des die Reflektion verursachenden Objektes zum Empfänger und somit eine Höhe des Objektes zu bestimmen. Je nach dem, wie lang die Laufzeit des reflektierten Sendeimpluses ist, fällt er zu einem Teil in die Empfangszeitspanne des ersten Empfängers und zum verbleibenden Teil in die Empfangszeitspanne des zweiten Empfängers - zumindest, wenn der Sendeimpuls in solch einem Abstand von der Vorrichtung zur Türraumüberwachung reflektiert wird, dass er auf jeden Fall innerhalb des von den beiden Empfangszeitspannen definierten Empfangszeitraum liegt.

In einer Weiterbildung können zusätzliche Empfänger, beispielsweise dritte und vierte Empfänger analog zu dem zweiten Empfänger unmittelbar benachbart zum ersten Empfänger angeordnet werden, deren die Empfangszeitspannen entsprechend später liegen, um eine weitere Differenzierung der Höhenlage zu ermöglichen. Die Empfängermatrix weist in einer Ausführungsform mindestens eine Zeile und mindestens eine Spalte auf, beispielsweise 320 Zeilen und 240 Spalten oder umgekehrt. Bevorzugt weist dabei jeder Empfängerblock der Empfängermatrix 320 Spalten auf und die Zeilen aller Empfängerblöcke ergeben zusammenaddiert 240 Zeilen. Je nach Anwendungsfall können auch größere oder kleinere Empfängermatrixes vorgesehen sein, z.B. 640 Spalten und 480 Zielen (VGA) oder dergleichen.

In einer weiteren Ausführungsform ist die Steuereinheit ausgebildet, mehrfach einen Sendepuls des Senders auszulösen und die jeweiligen Empfänger zu aktivieren. Die Speichereinheit jedes Empfängers ist hierbei ausgebildet, die empfangenen reflektierten Signalanteile des jeweiligen Empfängers über mehrere Empfangszeitspannen des Empfängers aufzuintegrieren und zu speichern. Die Steuereinheit ist weiter ausgebildet, die Auswerteeinheit erst nach der Integration über mehrere Empfangszeitspannen zu aktivieren. Mit Hilfe der wiederholten Bildaufnahme können Signalhöhen der empfangenen reflektierten Signalanteile in den jeweiligen Empfänger verbessert und somit die Auswertung erleichtert und deren Genauigkeit verbessert werden. Dabei ist es bevorzugt, wenn die Steuereinheit ausgebildet ist, so lange Sendepulse des Senders auszulösen und die Empfänger zu aktivieren bis in allen Speichereinheiten eine vorbestimmte Signalhöhe durch die Aufintegration erreicht ist und erst dann die Auswerteeinheit zu aktivieren.

Der Sendepuls kann eine beliebige Signalform haben und insbesondere ein Rechteckimpuls, eine Impulskette oder ein sinusförmig moduliertes Lichtsignal sein. Der Sender kann beispielsweise als mindestens eine Pulslaserdiode, bevorzugt mit einer Wellenlänge im Infrarotbereich oder im nahen Infrarotbereich, ausgebildet sein. Die Steuereinheit kann ein Field-programmable gate array (FGPA) oder Logikzellen umfassen.

Ist der Sendepuls ein sinusförmig moduliertes Lichtsignal sind die Empfangszeitspannen eines zweiten oder auch dritten und vierten Empfängers bevorzugt derart gewählt, dass innerhalb der jeweiligen Empfangszeitspanne bestimmte Phasenlagen, beispielweise 90° oder 180° der reflektierten Signalanteile aufgenommen werden.

Bevorzugt ist die Tür eine Fahrzeugtür, insbesondere eine Bus-, Straßenbahn- oder Zugtür. Weiterhin ist es bevorzugt, wenn die Tür eine automatische Tür ist.

Die Erfindung erlangt insbesondere durch die zunehmende Automatisierung von Fahrzeugen an Bedeutung. Das vorrangige Anwendungsgebiet ist daher die Überwachung von automatischen Türen vorrangig in Fahrzeugen des öffentlichen Verkehrs, wie beispielsweise in Bussen und Bahnen.

In einer Ausführungsform ist die Auswerteeinheit ausgebildet, bei Vorliegen signifikanter Unterschiede zwischen Bilddaten und Referenzbilddaten oder wenn der Abstandswert kleiner als ein hinterlegter Referenzwert ist, ein Warnsignal auszugeben und/oder ein Signal zur Türöffnung oder ein Signal zur Türoffenhaltung an eine Türsteuerungseinheit der Tür auszugeben. Durch Ausgeben eines Warnsignals kann beispielsweise bei Fahrzeugtüren der Fahrer auf noch außerhalb des Fahrzeugs im Türbereich befindliche Personen oder Gegenstände hingewiesen werden. Mit Hilfe des Signales zur Türöffnung kann die Tür für im Außenbereich befindliche Gegenstände automatisch geöffnet werden. Alternativ kann die Tür so lange sich Personen im Außenbereich befinden, über ein Signal zur Türoffenhaltung weiter offengehalten werden. Ein weiterer Einsatzfall der beschriebenen Erfindung liegt daher neben der reinen Überwachung von Türräumen im automatischen Öffnen von Automatiktüren. Dies ist eine Anwendung, die insbesondere in der Gebäudeautomatisierung zum Einsatz kommt, aber auch im Bereich von Fahrzeugtüren im öffentlichen Nahverkehr Anwendung findet.

Im Rahmen einer Weiterbildung der Erfindung wird der überwachte Türraumbereich durch eine aktive Projektion auf den Fußboden markiert. Eine solche Option lässt sich beispielsweise durch die Aktivierung einer Projektionslaserdiode (beispielsweise ein VCSEL mit einer vorgeschalteten diffraktiven Optik) realisieren.

In einer Ausführungsform des Verfahrens gemäß dem dritten Aspekt der Erfindung werden aus den bestimmten Abständen Topographiebilddaten erzeugt und diese mit hinterlegten Referenzbilddaten für einen freien Türraum verglichen. Die Auswertung der Bilddaten wird wie bereits beschrieben an Hand von Referenzen erreicht. Ein Referenzsignalbild wird dann angelegt, wenn der Türraum in allen Segmenten als frei betrachtet werden kann. Typischerweise wird diese Referenzierung durch einen Einlernvorgang umgesetzt. Dieser Einlernvorgang kann durch ein manuelles Einlernen erfolgen. Dies ist insbesondere dann geeignet, wenn der Türraum bekannt ist und Abbilder des Türraums bekannt sind.

In einer weiteren Ausführungsform werden die hinterlegten Referenzbilddaten bei einem bekanntermaßen freien Türraum gemäß dem jeweiligen Verfahren des zweiten oder dritten Aspektes der Erfindung aufgenommen. Alternativ werden die hinterlegten Referenzbilddaten statistisch erzeugt, indem eine Vielzahl von Topographiebilddaten erzeugt wird und miteinander verglichen wird und solche Topographiebilddaten als Referenzbilddaten definiert werden, die über eine vordefinierte Zeitspanne unverändert bleiben. Es wird also eine große Menge von aufgenommenen Bildern, hinsichtlich ihrer inneren Dynamik, also der Änderung von Bildinhalten über die Zeit, miteinander verglichen. Bilder, die sich über eine definierte Zeit als konstant erweisen, bilden einen stabilen Hintergrund ab und werden dann als Referenzbilder festgelegt. Das hier beschriebene Time-of-Flight-Verfahren liefert für diese Bewertung beste Voraussetzungen, da es sich als stabil gegenüber Änderungen von Umgebungslicht, Schattenwurf, Änderung des Reflexionsverhaltens des Bodens (beispielsweise durch Nässe) erweist.

In einer weiteren Ausführungsform sind die Referenzbilddaten oder die Referenzwerte zentral hinterlegt. In Anwendungen, in denen die Türen Fahrzeugtüren von Fahrzeugen im öffentlichen Personennahverkehr sind, können die Referenzdaten beispielsweise über einen zentralen Bildspeicher (Cloud) erfasst und hinterlegt werden und die Referenzbilddaten der Außenbereiche der Türräume dynamisch den Fahrzeugen zur Verfügung gestellt werden. Dieser Ansatz ist insbesondere dann von Vorteil, wenn die Höhe des Bordsteins oder der Plattform bei Zügen an den Haltestellen in einem Netz unterschiedlich sind. Die Übergabe der Referenzdaten kann sowohl einmalig im Fahrzeugdepot mit Festlegung der Route erfolgen (beispielsweise über WLAN) oder auch dynamisch während der Fahrt (beispielsweise über LTE). Alternativ können die Referenzbilddaten des Außenbereiches des Türraums auch in das Kartenmaterial der genutzten digitalen Routenkarten eingearbeitet sein.

Die Beschreibung der Verfahren einerseits und der Vorrichtung andererseits sind komplementär zueinander zu verstehen.

Nachfolgend werden Ausführungsbeispiele der Erfindung anhand von Zeichnungen beschrieben, dabei zeigen:
Fig. 1 schematisch ein Ausführungsbeispiel einer Vorrichtung zur Türraumüberwachung gemäß dem ersten Aspekt der Erfindung,
Fig. 2 schematisch eine Empfängermatrix mit einer Vielzahl erster und zweiter Sensoren,
Fig. 3a und 3b schematisch das Verfahrensprinzip eines Ausführungsbeispiels des Verfahrens gemäß dem zweiten Aspekt der Erfindung,
Fig. 4 schematisch das Verfahrensprinzip eines Ausführungsbeispiels des Verfahrens gemäß dem dritten Aspekt der Erfindung; und
Fig. 5 eine Prinzipskizze zur Erläuterung der Laufzeitmessung bei sinusförmig modulierten Lichtsignalen als Sendepulse.

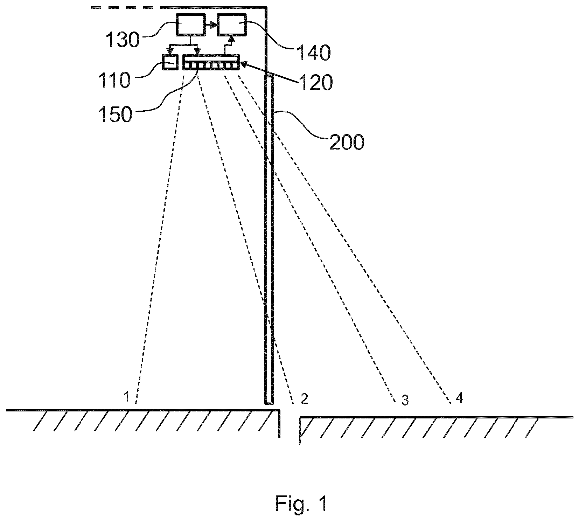

Fig. 1 zeigt schematisch ein Ausführungsbeispiel einer Vorrichtung zur Türraumüberwachung 100 gemäß dem ersten Aspekt der Erfindung sowie den damit überwachten Türraum einer partiell verglasten Tür 200. Die Vorrichtung 100 umfasst einen Sender 110 zum Senden mindestens eines Sendepulses elektromagnetischer Strahlung, sowie einen Bildaufnehmer 120. Des Weiteren umfasst die Vorrichtung 100 in der gezeigten Ausführungsform eine mit dem Bildaufnehmer 120 und dem Sender 110 verbundene Steuerungseinheit 130 sowie eine Auswerteeinheit 140.

Der Bildaufnehmer 120 umfasst eine Empfängermatrix 150 mit einem Innenblock 1 und drei Empfängerblöcken 2, 3 und 4. In Fig. 1 sind die jeweils von den Blöcken abgedeckten Abstandsbereiche kenntlich gemacht. Die Empfängermatrix setzt sich somit zusammen aus: dem Innenblock 1 mit m1 Zeilen und n1 Spalten, dem ersten Empfängerblock 2 mit m2 Zeilen und n2 Spalten, dem zweiten Empfängerblock 3 mit m3 Zeilen und n3 Spalten und dem dritten Empfängerblock 4 mit m4 Zeilen und n4 Spalten. Im konkreten Beispiel hat der Bildaufnehmer ein Format von 320x240 (QVGA). Während zweckmäßiger Weise n1=n2=n3=n4=240 gesetzt wird - die Spalten sich also über die volle Breite des Sensors erstrecken -, sind die Zeilen wie folgt aufgeteilt: m1=160, m2=100, m3=40, m4=20. Jeder Empfängerblock 2, 3, 4, weist entsprechend der Spalten und Zeilen eine Vielzahl von ersten Empfängern A2, A3 und A4 auf und unmittelbar benachbart zu diesem ersten Empfänger A2, A3 und A4 je einen zweiten Empfänger B2, B3 und B4. Der Innenblock 1 weist ebenfalls eine Vielzahl von ersten Empfängern A1 und zugeordneten zweiten Empfängern auf.

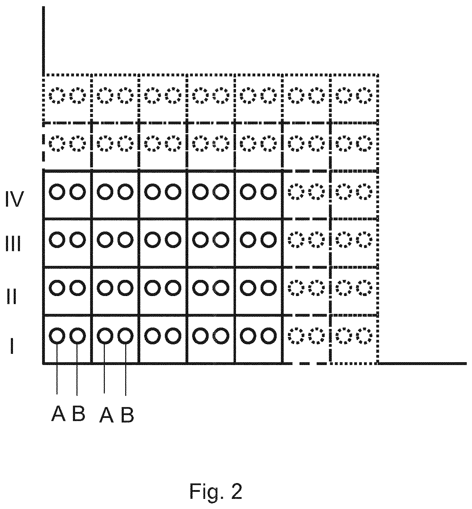

Es sei angemerkt, dass die Größe und die Orientierung der Empfängermatrix 150 des Bildaufnehmers 120 auch anders gewählt werden können, z.B. so, dass bei einem QVGA-Bildaufnehmer 320 Spalten in quer zur erwarteten Bewegungsrichtung, also z.B. in Richtung einer Türbreite orientiert sind, während 240 Zeilen in Bewegungsrichtung aufeinander folgen und auf die genannten Empfängerblöcke mᵢ aufgeteilt sind. Ein einfacher Aufbau einer Empfängermatrix 150 mit 4 Empfängerblöcken I, II, III, IV mit je einer Zeile und 5 Spalten ist in Fig. 2 dargestellt.

Die ersten und zweiten Empfänger jedes Empfängerblocks 2, 3, 4 sind ausgebildet, aus bestimmten Abstandsbereichen des Türraumes reflektierte Signalanteile des Sendepulses zu empfangen. Die ersten und zweiten Empfänger des Innenblocks 1 sind ausgebildet und angeordnet, in einem Innenbereich des Türraumes reflektierte Signalanteile des Sendepulses zu empfangen. Die empfangenen reflektierten Signalanteile werden dann in einer Speichereinheit des jeweiligen Empfängers aufintegriert und gespeichert.

Die Steuerungseinheit 130 ist ausgebildet, einen Sendepuls des Senders 110 auszulösen und dann über ein entsprechendes Zeitregime, das nachfolgend anhand der Fig. 2 erläutert wird, die verschiedenen Empfänger der unterschiedlichen Blöcke für vorbestimmte Zeiträume zu aktivieren. Dabei berücksichtigt die Steuerungseinheit 130 für jeden Empfängerblock die Ausrichtung des Empfängerblocks und damit die Laufzeit eines an der Glasscheibe der Tür 200 reflektierten Signalanteiles und aktiviert die jeweiligen Empfänger erst nach einem Ruhezeitraum, der länger ist als diese Laufzeit.

Die Auswerteeinheit 140 ist in der gezeigten Ausführungsform ausgebildet, die gespeicherten Signalanteile des jeweiligen Empfängers auszulesen und zu Topographiebilddaten zu verarbeiten und diese Topographiebilddaten mit hinterlegten Referenzbilddaten für einen freien Türraum zu vergleichen. Alternativ kann die Auswerteeinheit 140 ausgebildet sein, die gespeicherten Signalanteile des jeweiligen Empfängers auszulesen und einen Abstandswert daraus zu ermitteln und den jeweiligen Abstandswert mit einem hinterlegten Referenzwert für einen freien Türraum zu vergleichen.

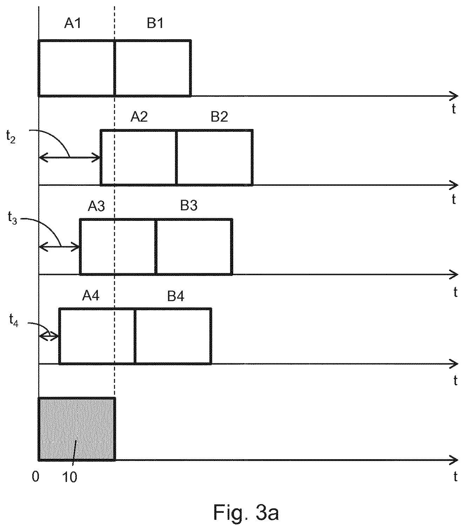

Fig. 3a zeigt schematisch das Verfahrensprinzip eines Ausführungsbeispiels des Verfahrens gemäß dem zweiten Aspekt der Erfindung und damit das Zeitregime, in dem die Steuerungseinheit 130 die verschiedenen Empfänger An, Bn aktiviert und den Sender 110 auslöst. Zum Zeitpunkt 0 wird der Sendepuls 10, hier in Form eines Rechteckimpulses einer Pulslaserdiode ausgelöst. Der Sendepuls 10 hat hier eine Dauer von 30 ns.

Nach einer dritten Ruhezeitspanne von t4=660 ps werden die ersten Empfänger A4 des Empfängerblocks 4 und nach deren ersten Empfangszeitspanne von 30 ns die zweiten Empfänger B4 des Empfängerblocks 4 aktiviert. In den zu den Empfänger A4 und B4 zugehörigen Speichereinheiten werden die reflektierten Signalanteile gespeichert, die in einem Höhenabstand von 10 cm vom Empfänger bis zum Boden liegen. Die erste Reflexion an der Glasscheibe in etwa 10 cm Abstand vom Bildaufnehmer wird durch die Verzögerung von 660 ps nicht empfangen.

Nach einer zweiten Ruhezeitspanne von t3=1,3 ns werden die ersten Empfänger A3 des Empfängerblocks 3 und nach deren ersten Empfangszeitspanne von 30 ns die zweiten Empfänger B3 des Empfängerblocks 3 aktiviert. In den zu den Empfänger A3 und B3 zugehörigen Speichereinheiten werden die reflektierten Signalanteile gespeichert, die in einem Höhenabstand von 20 cm vom Empfänger bis zum Boden liegen. Die erste Reflexion an der Glasscheibe 200 in etwa 10 cm Abstand vom Bildaufnehmer wird durch die Verzögerung von 1,3 ns nicht empfangen.

Nach einer ersten Ruhezeitspanne von t2= 6,6 ns werden die ersten Empfänger A2 des Empfängerblocks 2 und nach deren ersten Empfangszeitspanne von 30 ns die zweiten Empfänger B2 des Empfängerblocks 2 aktiviert. In den zu den Empfänger A2 und B2 zugehörigen Speichereinheiten werden die reflektierten Signalanteile gespeichert, die in einem Höhenabstand von 100 cm vom Empfänger bis zum Boden liegen. Die erste Reflexion an der Glasscheibe in etwa 100 cm Abstand vom Bildaufnehmer wird durch die Verzögerung von 6,6 ns nicht empfangen.

Die kurzen Ruhezeitspannen erfordern Verzögerungszeiten im ps (Pikosekunden) Bereich. Da die Ausbreitungsgeschwindigkeit elektrischer Impulse auf einer Leiterplatte mit Kupfer in der Größenordnung von 67 % der Lichtgeschwindigkeit im Vakuum liegt, also bei etwa 5 ps/mm, werden die Verzögerungszeiten von einer in den Bildaufnehmer 120 integrierten Verzögerungseinheit (nicht abgebildet) gebildet.

Die Bildaufnahme im Innenblock 1 geschieht unmittelbar mit dem Auslösen des Sendepulses ohne Verzögerung. Im Beobachtungsfeld des Innenblocks 1 befindet sich keine Glasscheibe.

Einer Bildaufnahme mit dem beschriebenen Zeitregime können mehrere Wiederholungen folgen, solange bis die Menge gewonnener Signalelektronen in den Speichereinheiten der Empfänger A und B in allen Blöcken eine ausreichend hohe Signalhöhe erreichen. Dann werden die gespeicherten Signalanteile des jeweiligen Empfängers ausgelesen und in der Auswertungseinheit zu Topographiebilddaten verarbeitet und anschließend ausgewertet. Für diesen Zweck werden die Topographiebilddaten in einem Bildspeicher abgelegt.

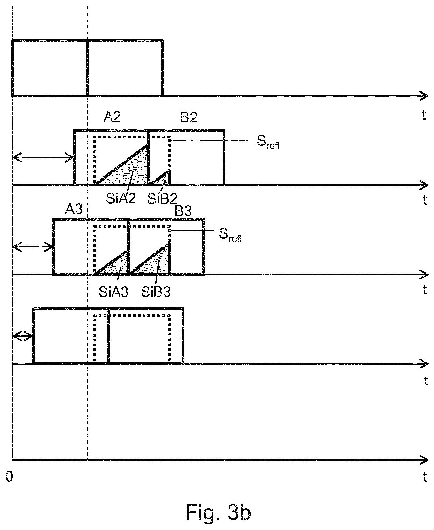

In Fig. 3b ist exemplarisch der Empfang reflektierter Signalanteile und deren Aufintegration in den Empfänger A3, B3, A2 und B2 gezeigt. Je nach Eintreffen des reflektierten Signalanteils Srefl in Relation zur jeweiligen Empfangszeitspanne entfallen unterschiedliche Anteile auf den ersten Empfänger und den zweiten Empfänger und werden dort aufintegriert und gespeichert. Über einen Vergleich der beiden aufintegrierten Signalanteile SiA3 und SiB3, oder im Fall des zweiten Empfängerblocks SiA2 und SiB2 lässt sich so dann bestimmen, in welchem Höhenbereich ein wie großer Anteil reflektiert wurde und so die Höhe des Objektes, dass die Reflektion verursacht hat, genau bestimmen.

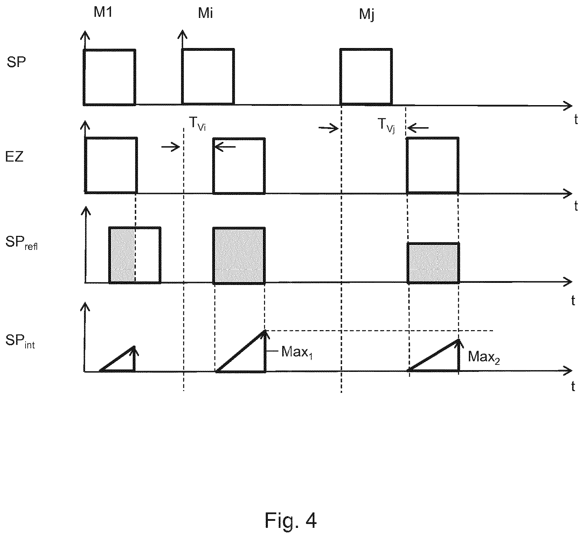

Fig. 4 zeigt schematisch das Verfahrensprinzip eines Ausführungsbeispiels des Verfahrens gemäß dem dritten Aspekt der Erfindung. Hier wird eine Vielzahl von Sendepulsen SP elektromagnetischer Strahlung in vorbestimmten Zeitabständen ausgesendet. Bei jedem Sendepuls M1... Mi... Mj wird eine Verzögerungszeit für einen Empfangszeitraum EZ bestimmt, die von Sendepuls zu Sendepuls ansteigt. Nach der jeweiligen Verzögerungszeit Tvi... Tvj werden reflektierte Signalanteile SPrefl empfangen und für jeden Sendepuls aufintegriert (SPint). Beim ersten Sendepuls M1 in der Darstellung wird auf Grund der Verschiebung zwischen reflektiertem Signalanteil SPrefl und Empfangszeitraum nur ein Teil des reflektierten Signalanteiles aufintegriert. Entspricht die Verzögerungszeit der Laufzeit des an der Tür reflektierten Signalanteiles, wie hier bei Sendepuls Mi und Verzögerungszeit Tvi, so erreichen die aufintegrierten Signalanteile ein erstes Maximum Max1. Wird in einer weiteren Messung, hier mit Sendepuls Mj wiederum eine Übereinstimmung zwischen Verzögerungszeit Tvj und Laufzeit von an einem Objekt im überwachten Außenbereich reflektierten Signalanteilen erreicht, kommt es zu einem zweiten Maximum Max2. Der erste Maximalwert Max1 wird verworfen und aus dem zweiten Maximalwert, der bei einer höheren Verzögerungszeit Tvj als der Verzögerungszeit Tvi beim ersten Maximalwert Max1 erreicht wurde, wird ein Abstand bestimmt. Dieser Abstandswert wird dann mit einem hinterlegten Referenzwert für einen freien Türraum verglichen.

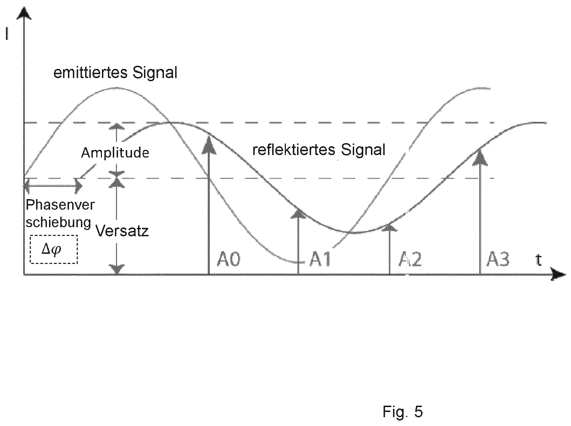

Bei Verwendung eines sinusförmig modulierten Lichtsignals als Sendepulse kann die Laufzeit und damit Abstandswert so bestimmt werden, dies ist in Figur 5 gezeigt.

### Bezugszeichenliste

- 100: Vorrichtung
- 110: Sender
- 120: Bildaufnehmer
- 130: Steuerungseinheit
- 140: Auswerteeinheit
- 150: Empfängermatrix
- 200: Tür

## Patentansprüche

1. Vorrichtung (100) zur Türraumüberwachung einer zumindest partiell verglasten Tür (200) aufweisend
- mindestens einen Sender (110) zum Aussenden mindestens eines Sendepulses elektromagnetischer Strahlung,
- einen Bildaufnehmer (120) umfassend eine Empfängermatrix (150) mit mindestens einem ersten Empfängerblock, der eine Vielzahl von ersten Empfängern aufweist, wobei die ersten Empfänger des ersten Empfängerblocks ausgebildet und angeordnet sind, in einem zweiten vorbestimmten auf die Tür (200) bezogenen Abstandsbereich eines Außenbereichs des Türraumes reflektierte Signalanteile des Sendepulses zu empfangen, wobei jeder erste Empfänger eine Speichereinheit aufweist, die ausgebildet ist, die empfangenen reflektierten Signalanteile aufzuintegrieren und zu speichern;
- eine mit dem Bildaufnehmer (120) und dem Sender (110) verbundene Steuerungseinheit (130), die ausgebildet ist:
- einen Sendepuls des Senders (110) auszulösen, und
- nach einer vorbestimmten ersten Ruhezeitspanne, die länger ist als eine Zeitspanne, in der ein von der verglasten Tür (200) reflektiertes Signal des Sendepulses die ersten Empfänger des ersten Empfängerblockes erreicht, die ersten Empfänger des ersten Empfängerblocks für eine vorbestimmte erste Empfangszeitspanne zu aktivieren,
- eine Auswerteeinheit (140), die ausgebildet ist,
- die gespeicherten Signalanteile des jeweiligen Empfängers auszulesen und zu Topographiebilddaten zu verarbeiten,
- die Topographiebilddaten mit hinterlegten Referenzbilddaten für einen freien Türraum zu vergleichen oder die ausgebildet ist,
- die gespeicherten Signalanteile des jeweiligen Empfängers auszulesen und einen Abstandswert daraus zu ermitteln, und
- den jeweiligen Abstandswert mit einem hinterlegten Referenzwert für einen freien Türraum zu vergleichen.

2. Vorrichtung (100) nach Anspruch 1, bei der die Empfängermatrix (150) zusätzlich mindestens einen Innenblock aufweist, der eine Vielzahl von ersten Empfängern aufweist, wobei die ersten Empfänger des Innenblocks ausgebildet und angeordnet sind, in einem Innenbereich des Türraumes reflektierte Signalanteile des Sendepulses zu empfangen, wobei jeder erste Empfänger eine Speichereinheit aufweist, die ausgebildet ist, die empfangenen reflektierten Signalanteile aufzuintegrieren und zu speichern, und bei der die Steuerungseinheit (130) ausgebildet ist, die ersten Empfänger des Innenblocks unmittelbar nach dem Auslösen des Sendeimpulses für eine vorbestimmte erste Innen-Empfangszeitspanne zu aktivieren.

3. Vorrichtung (100) nach einem der vorstehenden Ansprüche, bei der
- die Empfängermatrix (150) einen zweiten Empfängerblock umfasst, der eine Vielzahl von ersten Empfängern aufweist, wobei die ersten Empfänger des zweiten Empfängerblocks ausgebildet und angeordnet sind, in einem zweiten vorbestimmten auf die Tür (200) bezogenen Abstandsbereich eines Außenbereichs des Türraumes reflektierte Signalanteile des Sendepulses zu empfangen, wobei jeder Empfänger eine Speichereinheit aufweist, in der die empfangenen reflektierten Signalanteile aufintegriert und gespeichert werden, und wobei der erste vorbestimmte Abstandsbereich näher an der Tür (200) ist als der zweite vorbestimmte Abstandsbereich und
- die Steuerungseinheit (130) ausgebildet ist, nach einer vorbestimmten zweiten Ruhezeitspanne, die länger ist als eine Zeitspanne, in der ein von der verglasten Tür (200) reflektiertes Signal des Beleuchtungssignals die ersten Empfänger des zweiten Empfängerblockes erreicht, die ersten Empfänger des zweiten Empfängerblocks für eine vorbestimmte zweite Empfangszeitspanne zu aktivieren.

4. Vorrichtung (100) nach einem der vorstehenden Ansprüche, wobei unmittelbar benachbart zu jedem ersten Empfänger zusätzlich ein zweiter Empfänger angeordnet ist, der ebenso wie der erste Empfänger des jeweiligen Knotenpunktes ausgebildet und angeordnet ist, wobei jeder zweite Empfänger eine Speichereinheit aufweist, die ausgebildet ist, die empfangenen reflektierten Signalanteile aufzuintegrieren und zu speichern, und wobei
- die Steuerungseinheit (130) ausgebildet ist, unmittelbar im Anschluss an die jeweilige Empfangszeitspanne des jeweiligen ersten Empfängers den zweiten Empfänger für eine vorbestimmte verzögerte Empfangszeitspanne zu aktivieren.

5. Vorrichtung (100) nach einem der vorstehenden Ansprüche, bei der die Empfängermatrix (150) mindestens eine Zeile und mindestens eine Spalte aufweist, insbesondere 320 Zeilen und 240 Spalten aufweist.

6. Vorrichtung (100) nach einem der vorstehenden Ansprüche, bei der
- die Steuereinheit ausgebildet ist, mehrfach einen Sendepuls des Senders(110) auszulösen und die jeweiligen Empfänger zu aktivieren;
- die Speichereinheit jedes Empfängers ausgebildet ist, die empfangenen reflektierten Signalanteile des jeweiligen Empfängers über mehrere Empfangszeitspannen des Empfängers aufzuintegrieren und zu speichern und
- die Steuereinheit ausgebildet ist, die Auswerteeinheit (140) erst nach der Integration über mehrere Empfangszeitspannen zu aktivieren.

7. Vorrichtung (100) nach Anspruch 6, bei der die Steuereinheit ausgebildet ist, so lange Sendepulse des Senders (110) auszulösen und die Empfänger zu aktivieren bis in allen Speichereinheiten eine vorbestimmte Signalhöhe durch die Aufintegration erreicht ist und erst dann die Auswerteeinheit (140) zu aktivieren.

8. Vorrichtung (100) nach einem der vorstehenden Ansprüche, bei der der Sender (110) eine Pulslaserdiode mit einer Wellenlänge im Infrarotbereich ist.

9. Vorrichtung (100) nach einem der vorstehenden Ansprüche, bei der die Auswerteeinheit (140) ausgebildet ist,
- bei Vorliegen signifikanter Unterschiede zwischen Bilddaten und Referenzbilddaten oder wenn der Abstandswert kleiner als ein hinterlegter Referenzwert ist
- ein Warnsignal auszugeben und/oder
- ein Signal zur Türöffnung oder ein Signal zur Türoffenhaltung an eine Türsteuerungseinheit (130) der Tür (200) auszugeben.

10. Verfahren zur Türraumüberwachung einer zumindest partiell verglasten Tür (200) umfassend die Schritte
- Aussenden eines Sendepulses elektromagnetischer Strahlung,
- nach einer vorbestimmten ersten Ruhezeitspanne, die länger ist als eine Zeitspanne, in der ein von der verglasten Tür (200) reflektiertes Signal des Sendepulses die ersten Empfänger des ersten Empfängerblockes erreicht, Empfangen in einem Außenbereich des Türraumes mit einem ersten vorbestimmten Abstand zur Tür (200) reflektierter Signalanteile des Sendepulses über eine Empfangszeitspanne
- Aufintegrieren und Speichern der empfangenen reflektierten Signalanteile und
- Auslesen der gespeicherten Signalanteile und
- Verarbeiten der gespeicherten Signalanteile zu Topographiebilddaten und Vergleichen der Topographiebilddaten mit hinterlegten Referenzbilddaten für einen freien Türraum oder
- Ermitteln eines Abstandswertes aus den gespeicherten Signalanteilen und Vergleichen des jeweiligen Abstandswertes mit einem hinterlegten Referenzwert für einen freien Türraum.

11. Verfahren zur Türraumüberwachung einer zumindest partiell verglasten Tür (200) umfassend die Schritte
- Aussenden einer Vielzahl von Sendepulsen elektromagnetischer Strahlung in vorbestimmten Zeitabständen
- Bestimmen einer Verzögerungszeit bei jedem Aussenden eines Sendepulses, wobei die Verzögerungszeit mit jedem Sendepuls stufenweise ansteigt
- Empfangen reflektierter Signalanteile des Sendepulses nach der jeweiligen Verzögerungszeit
- Aufintegrieren und Speichern der empfangenen reflektierten Signalanteile für jeden Sendepuls
- Bestimmen eines ersten und eines zweiten Maximalwertes der aufintegrierten Signalanteile, wobei der erste Maximalwert bei einer geringeren Verzögerungszeit erreicht wurde als der zweite Maximalwert
- Bestimmen eines Abstandswertes aus dem zweiten Maximalwert und
- Vergleichen des jeweiligen Abstandswertes mit einem hinterlegten Referenzwert für einen freien Türraum.

12. Verfahren nach Anspruch 11, bei dem aus den bestimmten Abständen Topographiebilddaten erzeugt werden und diese mit hinterlegten Referenzbilddaten für einen freien Türraum verglichen werden.

13. Verfahren nach einem der Ansprüche 10 oder 12, bei dem die hinterlegten Referenzbilddaten statistisch erzeugt werden, indem eine Vielzahl von Topographiebilddaten erzeugt wird und miteinander verglichen wird und solche Topographiebilddaten als Referenzbilddaten definiert werden, die über eine vordefinierte Zeitspanne unverändert bleiben.

14. Verfahren nach einem der Ansprüche 10 bis 13, bei dem die Referenzbilddaten oder die Referenzwerte zentral hinterlegt sind.

## Claims

1. Device (100) for monitoring the door space of an at least partially glazed door (200), comprising
- at least one transmitter (110) for transmitting at least one transmission pulse of electromagnetic radiation,
- an image sensor (120) comprising a receiver matrix (150) with at least one first receiver block, which has a plurality of first receivers, wherein the first receivers of the first receiver block are configured and arranged to receive signal components of the transmission pulse reflected in a second predetermined distance range of an exterior area of the door space related to the door (200), each first receiver having a memory unit that is configured to integrate and store the received reflected signal components;
- a control unit (130) connected to the image sensor (120) and the transmitter (110), which is configured:
- to trigger a transmission pulse of the transmitter (110), and
- after a predetermined first rest period, which is longer than a period in which a signal of the transmission pulse reflected by the glazed door (200) reaches the first receivers of the first receiver block, to activate the first receivers of the first receiver block for a predetermined first reception period,
- an evaluation unit (140) which is configured to
- read out the stored signal components of the respective receiver and process them into topography image data,
- compare the topography image data with stored reference image data for a free door space,
or which is configured to
- read out the stored signal components of the respective receiver and determine a distance value from them, and
- compare the respective distance value with a stored reference value for a free door space.

2. Device (100) according to claim 1, in which the receiver matrix (150) additionally has at least one inner block, which has a plurality of first receivers, wherein the first receivers of the inner block are configured and arranged to receive signal components of the transmission pulse reflected in an interior area of the door space, wherein each first receiver has a memory unit that is configured to integrate and store the received reflected signal components, and wherein the control unit (130) is configured to activate the first receivers of the inner block immediately after the transmission pulse is triggered for a predetermined first inner reception time period.

3. Device (100) according to one of the preceding claims, wherein
- the receiver matrix (150) comprises a second receiver block having a plurality of first receivers, wherein the first receivers of the second receiver block are configured and arranged to receive signal components of the transmission pulse reflected in a second predetermined distance range of an exterior area of the door space related to the door (200) of an exterior area of the door space, each receiver having a memory unit in which the received reflected signal components are integrated and stored, and wherein the first predetermined distance range is closer to the door (200) than the second predetermined distance range, and
- the control unit (130) is configured to, after a predetermined second idle time period that is longer than a time period in which a signal reflected from the glazed door (200) reaches the first receivers of the second receiver block, to activate the first receivers of the second receiver block for a predetermined second reception period.

4. Device (100) according to one of the preceding claims, wherein a second receiver is additionally arranged immediately adjacent to each first receiver, which is configured and arranged in the same way as the first receiver of the respective node, wherein each second receiver has a memory unit which is configured to integrate and store the received reflected signal components, and wherein
- the control unit (130) is configured to activate the second receiver for a predetermined delayed reception period immediately following the respective reception period of the respective first receiver.

5. Device (100) according to one of the preceding claims, wherein the receiver matrix (150) has at least one row and at least one column, in particular 320 rows and 240 columns.

6. Device (100) according to one of the preceding claims, wherein
- the control unit is configured to trigger a transmission pulse from the transmitter (110) multiple times and to activate the respective receivers;
- the memory unit of each receiver is configured to integrate and store the received reflected signal components of the respective receiver over several reception time periods of the receiver, and
- the control unit is configured to activate the evaluation unit (140) only after integration over several reception time periods.

7. Device (100) according to claim 6, in which the control unit is configured to trigger transmission pulses from the transmitter (110) and activate the receivers until a predetermined signal level is reached in all memory units through integration, and only then to activate the evaluation unit (140).

8. Device (100) according to one of the preceding claims, wherein the transmitter (110) is a pulsed laser diode with a wavelength in the infrared range.

9. Device (100) according to one of the preceding claims, wherein the evaluation unit (140) is configured
- in the event of significant differences between image data and reference image data or if the distance value is smaller than a stored reference value
- to output a warning signal and/or
- to output a signal for opening the door or a signal for keeping the door open to a door control unit (130) of the door (200).

10. Method for monitoring the door space of an at least partially glazed door (200), comprising the steps of
- transmitting a transmission pulse of electromagnetic radiation,
- after a predetermined first rest period, which is longer than a period in which a signal of the transmission pulse reflected by the glazed door (200) reaches the first receivers of the first receiver block, receiving in an exterior area of the door space at a first predetermined distance from the door (200) over a reception period
- integrating and storing the received reflected signal components, and
- reading out the stored signal components and
- processing the stored signal components into topography image data and comparing the topography image data with stored reference image data for a free door space or
- determining a distance value from the stored signal components and comparing the respective distance value with a stored reference value for a free door space.

11. Method for monitoring the door space of an at least partially glazed door (200), comprising the steps of
- transmitting a plurality of transmission pulses of electromagnetic radiation at predetermined time intervals
- determining a delay time each time a transmission pulse is emitted, wherein the delay time increases incrementally with each transmission pulse
- receiving reflected signal components of the transmission pulse after the respective delay time
- integrating and storing the received reflected signal components for each transmission pulse
- determining a first and a second maximum value of the integrated signal components, wherein the first maximum value was reached at a shorter delay time than the second maximum value
- determining a distance value from the second maximum value and
- comparing the respective distance value with a stored reference value for a free door space.

12. Method according to claim 11, in which topography image data is generated from the determined distances and this is compared with stored reference image data for a free door space.

13. Method according to one of claims 10 or 12, wherein the stored reference image data is generated statistically by generating a plurality of topography image data and comparing them with each other, and defining as reference image data those topography image data that remain unchanged over a predefined period of time.

14. Method according to one of claims 10 to 13, wherein the reference image data or the reference values are stored centrally.

## Revendications

1. Installation (100) de surveillance d'une zone d'une porte (200) vitrée au moins partiellement comportant
- au moins un émetteur (110) pour émettre au moins une impulsion d'émission d'un rayonnement électromagnétique,
- un enregistreur (120) d'images comprenant une matrice (150) de récepteurs ayant au moins un premier bloc de récepteurs, qui a une pluralité de premiers récepteurs, dans lequel les premiers récepteurs du premier bloc de récepteurs sont constitués et disposés pour recevoir des proportions de signal de l'impulsion d'émission réfléchies dans une deuxième partie déterminée à l'avance à distance, rapportée à la porte (200), d'une partie extérieure de la zone de porte, dans laquelle chaque premier récepteur a une unité de mémoire, qui est constituée pour intégrer et mettre en mémoire les proportions de signal réfléchies reçues,
- une unité (130) de commande, qui est reliée à l'enregistreur (120) d'images et à l'émetteur (110) et qui est constituée :
- pour déclencher une impulsion d'émission de l'émetteur (110), et
- pour, après un premier laps de temps de repos déterminé à l'avance, qui est plus grand qu'un laps de temps, dans lequel un signal de l'impulsion d'émission réfléchi par la porte (200) vitrée atteint les premiers récepteurs du premier bloc de récepteurs, activer les premiers récepteurs du premier bloc de récepteurs pendant un premier laps de temps de réception déterminé à l'avance,
- une unité (140) d'évaluation, qui est constituée,
- pour lire les proportions de signal mises en mémoire du récepteur respectif et les transformer en données d'images topographiques,
- pour comparer les données d'images topographiques à des données d'images de référence mises en mémoire pour une zone de porte libre ou qui est constituée,
- pour lire les proportions de signal mises en mémoire du récepteur respectif et en déterminer une valeur de distance, et
- comparer la valeur de distance respective à une valeur de référence mise en mémoire pour une zone de porte libre.

2. Installation (100) suivant la revendication 1, dans laquelle la matrice (150) de récepteurs a en plus au moins un bloc intérieur, qui a une pluralité de premiers récepteurs, dans laquelle les premiers récepteurs du bloc intérieur sont constitués et disposés de manière à recevoir des proportions de signal de l'impulsion d'émission réfléchies dans une partie intérieure de la zone de porte, dans laquelle chaque premier récepteur a une unité de mémoire, qui est constituée pour intégrer les proportions de signal réfléchies reçues et les mettre en mémoire, et dans laquelle l'unité (130) de commande est constituée pour activer les premiers récepteurs du bloc intérieur immédiatement après le déclenchement de l'impulsion d'émission pendant un premier laps de temps de réception intérieure déterminé à l'avance.

3. Installation (100) suivant l'une des revendications précédentes, dans laquelle
- la matrice (150) de récepteur comprend un deuxième bloc de récepteurs, qui a une pluralité de premiers récepteurs, dans laquelle les premiers récepteurs du deuxième bloc de récepteurs sont constitués et disposés pour recevoir des proportions de signal réfléchies de l'impulsion d'émission dans une deuxième partie à distance déterminée à l'avance rapportée à la porte (200), d'une partie extérieure de la zone de porte, dans laquelle chaque récepteur a une unité de mémoire, dans laquelle les proportions de signal réfléchies reçues sont intégrées et mises en mémoire, et dans laquelle la première partie à distance déterminée à l'avance est plus près de la porte (200) que la deuxième partie à distance déterminée à l'avance, et
- l'unité (130) de commande est constituée pour activer, après un deuxième laps de temps de repos déterminé à l'avance, qui est plus long qu'un laps de temps, dans lequel un signal, réfléchi par la porte (200) vitrée, du signal d'éclairage atteint des premiers récepteurs du deuxième bloc de récepteurs, pour activer les premiers récepteurs du deuxième bloc de récepteurs pendant un deuxième laps de temps de réception déterminé à l'avance.

4. Installation (100) suivant l'une des revendications précédentes, dans laquelle, au voisinage immédiat de chaque premier récepteur, est disposé en plus un deuxième récepteur, qui est constitué et disposé tout comme le premier récepteur du point nodal respectif, dans laquelle chaque deuxième récepteur a une unité de mémoire, qui est constituée pour intégrer et mettre en mémoire les proportions de signal réfléchies reçues, et dans laquelle
- l'unité (130) de commande est constituée pour activer, immédiatement à la suite du laps de temps de réception respectif du premier récepteur respectif, le deuxième récepteur pendant un laps de temps de réception retardé déterminé à l'avance.

5. Installation (100) suivant l'une des revendications précédentes, dans laquelle la matrice (150) de réception a au moins une ligne et au moins une colonne en ayant, en particulier 320 lignes et 240 colonnes.

6. Installation (100) suivant l'une des revendications précédentes, dans laquelle
- l'unité de commande est constituée pour déclencher plusieurs fois une impulsion d'émission d'émetteur (110) et pour activer le récepteur respectif,
- l'unité de mémoire de chaque récepteur est constituée pour intégrer et mettre en mémoire les proportions de signal réfléchies reçues du récepteur respectif sur plusieurs laps de temps de réception du récepteur, et
- l'unité de commande est constituée pour activer l'unité (140) d'évaluation, seulement après l'intégration sur plusieurs laps de temps de réception.

7. Installation (100) suivant la revendication 6, dans laquelle l'unité de commande est constituée pour déclencher des impulsions d'émission d'émetteur (110) et pour activer les récepteurs jusqu'à ce que soit atteint, par l'intégration, dans toutes les unités de mémoire, une hauteur de signal déterminée à l'avance et pour activer alors seulement l'unité (140) d'évaluation.

8. Installation (100) suivant l'une des revendications précédentes, dans laquelle l'émetteur (110) est une diode laser à impulsions ayant une longueur d'onde dans le domaine infrarouge.

9. Installation (100) suivant l'une des revendications précédentes, dans laquelle l'unité (140) d'évaluation est constituée,
- pour, en présence de différences significatives entre des données d'images et des données d'images de référence ou si la valeur de distance est plus petite qu'une valeur de référence mise en mémoire,
- émettre un signal d'alerte et/ou
- envoyer, à une unité (130) de commande de la porte (200), un signal d'ouverture de porte ou un signal de maintien de la porte ouverte.

10. Procédé de surveillance de la zone d'une porte (200) vitrée au moins partiellement, comprenant les stades :
- émission d'une impulsion d'émission de rayonnement électromagnétique,
- après un premier laps de temps de repos déterminé à l'avance, qui est plus long qu'un laps de temps, dans lequel un signal de l'impulsion d'émission réfléchi par la porte (200) vitrée atteint les premiers récepteurs du premier bloc de récepteurs, recevoir, dans une partie extérieure de la zone de porte à une première distance déterminée à l'avance de la porte (200), des proportions de signal réfléchies de l'impulsion d'émission sur un laps de temps de réception,
- intégration et mise en mémoire des proportions de signal réfléchies reçues, et
- lecture des proportions de signal mises en mémoire et
- transformation des proportions de signal mises en mémoire en des données d'images topographiques et comparaison des données d'images topographiques à des données d'images de référence mises en mémoire pour une zone de porte libre ou
- détermination d'une valeur de distance, à partir des proportions de signal mises en mémoire, et comparaison de la valeur de distance respective à une valeur de référence mise en mémoire pour une zone de porte libre.

11. Procédé de surveillance d'une zone de porte (200) vitrée au moins en partie comprenant les stades :
- émission d'une pluralité d'impulsions d'émission de rayonnement électromagnétique dans des laps de temps déterminés,
- détermination d'un temps de retard pour chaque émission d'une impulsion d'émission, dans lequel le temps de retard augmente pas à pas avec chaque impulsion d'émission,
- réception de proportions de signal réfléchies de l'impulsion d'émission, après le temps de retard respectif,
- intégration et mise en mémoire des proportions de signal réfléchies reçues pour chaque impulsion d'émission,
- détermination d'une première et d'une deuxième valeurs maximum des proportions de signal intégrées, dans lequel la première valeur maximum a été atteinte après un temps de retard plus petit que la deuxième valeur maximum,
- détermination d'une valeur de distance à partir de la deuxième valeur maximum, et
- comparaison de la valeur de distance respective à une valeur de référence mise en mémoire pour une zone de porte libre.

12. Procédé suivant la revendication 11, dans lequel, à partir des distances déterminées, on produit des données d'images topographiques et on les compare à des données d'images de référence mises en mémoire pour une zone de porte libre.

13. Procédé suivant l'une des revendications 10 ou 12, dans lequel on produit statistiquement les données d'images de référence mises en mémoire en produisant une pluralité de données d'images topographiques et en les comparant entre elles et on définit les données d'images topographiques comme données d'images de référence, qui restent inchangées sur un laps de temps défini à l'avance.

14. Procédé suivant l'une des revendications 10 à 13, dans lequel les données d'images de référence ou les valeurs de référence sont mises en mémoire de manière centralisée.
